# EUROPÄISCHE PATENTSCHRIFT

(11) **EP 1 048 859 B1**
(45) Veröffentlichungstag und Bekanntmachung des Hinweises auf die Patenterteilung: **30.06.2004**
(21) Anmeldenummer: 00108971.3
(22) Anmeldetag: 27.04.2000
(51) Int. Cl.: F16C 3/02, F41A 9/76

(54) **Welle für ein angetriebenes Magazin**
Shaft for a driven ammunition magazine
Arbre pour un magasin de munitions entraîné

(30) Priorität: 29.04.1999 DE 19919617
(43) Veröffentlichungstag der Anmeldung: 02.11.2000
(73) Patentinhaber: Heckler & Koch GmbH, 78727 Oberndorf/Neckar (DE)
(72) Erfinder: Beckmann, Rudi, 78733 Aichhalden (DE)
(74) Vertreter: von Samson-Himmelstjerna, Friedrich R., Dipl.-Phys.

(56) Entgegenhaltungen:
- EP-A- 0 052 077
- EP-A- 0 272 399
- DE-A- 3 733 731
- DE-A- 3 804 901
- US-A- 4 429 615

## Beschreibung

Die Erfindung betrifft eine Welle zum Abgrenzen der aufeinanderfolgenden Patronen-Aufnahmezellen eines angetriebenen Magazines für eine Schnellfeuerwaffe, vorzugsweise für eine Flugzeug-Maschinenkanone, mit einem länglichen, im wesentlichen kreiszylindrischen Stab, dessen beide Enden zur Befestigung in einer Transportkette ausgebildet sind, und mit einem eine mittige Verdickung bildenden Mitnehmer (Oberbegriff des Anspruchs 1).

Auf diesem Gebiet sind die beiden Druckschriften DE 36 44 513 C1 und US-PS 4 429 615 bekannt.

Wegen der hohen Fluggeschwindigkeit moderner Kampfflugzeuge muß deren Kanone eine äußerst hohe Kadenz (Schußzahl pro Zeiteinheit) aufweisen, um eine noch befriedigende Deckung eines Zieles zu erreichen, das seinerseits mit hoher Geschwindigkeit bewegt sein kann. Solche Kanonen weisen deshalb ein angetriebenes Magazin auf, in dem die Patronen zwischen zwei mit hoher Geschwindigkeit umlaufenden Transportketten angeordnet sind, die durch querverlaufende Wellen miteinander verbunden sind. Zwei aufeinanderfolgende Wellen bilden zwischeneinander eine Zelle, die eine Patrone oder eine leere Patronenhülse aufnimmt.

Die Transportketten bewegen sich schrittweise mit der Frequenz der Schußfolge der Kanone, wobei die Wellen die zwischen ihnen liegenden Patronen zu Beginn und Ende eines jeden Schrittes abrupt beschleunigen und wieder abbremsen. Diese Patronen können eine verhältnismäßig hohe Masse aufweisen kann, so daß die Wellen bei jedem Schritt der Transportkette einer stoßartigen Wechselbelastung in Querrichtung unterzogen werden.

Diese ruckartigen Belastungen erzeugen Längsschwingungen in den beiden Transportketten und Querschwindungen in den Wellen. Da sich die beiden Schwingungsarten ungünstig ergänzen können, hat man bisher die Wellen aus hochfestem Stahl gefertigt, um die erforderliche Haltbarkeit zu gewährleisten. Außerdem wurde in der Mitte der Wellen ein sog. Mitnehmer ausgebildet, der die Form eines über die Welle überstehenden Ringes hat. Der Mitnehmer sorgt dafür, daß die Massenkräfte aus der jeweiligen Patrone an einer definierten Stelle, nämlich am Ort des Mitnehmers, in die Welle eingeleitet werden. An diesem Ort ist die Biegsamkeit der Welle infolge des Mitnehmers verringert.

Solche Stahlwellen sind recht schwer und erhöhen das Gesamtgewicht des Magazines erheblich, das aber gerade für Kampfflugzeuge möglichst gering sein sollte. Solche Magazine sind seit Jahrzehnten bekannt, und es wurde immer wieder versucht, die Stahlwellen durch solche aus leichterem Material zu ersetzen. Alle bisherigen Versuche waren aber nicht erfolgreich. So erwies sich Aluminium als zu wenig stabil. Faserverstärkungen im Aluminium waren ebenfalls wenig hilfreich, da die Fasern in Querrichtung beansprucht werden, in der ihre Haltbarkeit nur gering ist. Besonders kritische Stellen waren jeweils die Enden der Welle, die in die Ketten eingesetzt sind; ebenso deren Mitte, wo die Massenkräfte angreifen. Kunststoff wurde ebenfalls als viel zu wenig dauerfest angesehen. Titan wurde aus Kostengründen nicht in Betracht gezogen.

Aufgrund seiner überlegenen Festigkeit und der hohen Biege-Wechselbelastung der Wellen erwies sich Stahl letztlich noch immer als einzig geeignetes Material, wenn diese Wellen dauerfest sein sollen.

Aufgabe der Erfindung ist es, das Gewicht dieser Wellen zu verringern, ohne ihre Festigkeit in Frage zu stellen.

Man könnte davon ausgehen, den Querschnitt der Wellen an die Belastungen anzupassen und sie als Rohre mit ovalem Querschnitt auszubilden, dessen größere Achse in Laufrichtung der Transportkette weist. Man könnte auch Titanlegierungen verwenden, deren Kosten sich ja durch Erhöhung der Flugzeug-Nutzlast vielleicht wieder amortisieren lassen.

Die Erfindung geht aber einen völlig anderen Weg, indem sie für den Stab ein faserverstärktes Material wählt, das bisher nicht als ausreichend fest angesehen wurde, aber den Mitnehmer nicht aus demselben Material herstellt, sondern aus einem Elastomer.

Ein solches Elastomer wirkt grundsätzlich immer als Dämpfungsglied für die eingeleiteten, stoßartigen Kräfte, wegen der den Elastomeren inhärenten Hysterese, die kinetische Energie in Wärme umwandelt. Es wird hier davon ausgegangen, daß das Elastomer aufgrund seiner Eigenschaften die Stoßlasten, die von der Massenträgheit der Patrone herrühren, nicht unverändert überträgt, sondern Unstetigkeiten glättet. Eine Darstellung eines Kraftverlaufes in einem Kraft-Weg-Diagramm hat bei der Einleitung in das Elastomer steile Kanten und insbesondere scharfe Spitzen, während beim Übergang vom Elastomer in den Stab flachere Kanten und sanft abgerundete Spitzen vorliegen.

Der Stab ist als zylindrischer Körper ausgebildet, dessen stetiger Querschnittsverlauf und damit Faserverlauf nicht durch die einstückige Ausbildung des Mitnehmers beeinträchtigt ist. Der Mitnehmer ist in jedem Fall auf den Stab aufgebracht oder aufgeformt. Die Querkräfte werden in den Stab über die Länge des Mitnehmers verteilt und noch dazu stark abgedämpft eingebracht, so daß die Querbelastungen der Fasern im Stab auf einen Wert absinken, dem diese standhalten können.

Insgesamt bildet jedoch auch der faserverstärkte Kunststoffstab einen Körper, der dämpfend, auf jeden Fall aber phasenverschiebend wirkt. Das bisherige schwingende System aus Transportketten und Wellen, die alle aus Stahl bestanden, ist durch die Ausbildung der Wellen mit einem Stab aus faserverstärktem Kunststoff empfindlich gestört. Selbst wenn die faserverstärkten Stäbe schwingungsfähig sein sollten, schwingen sie doch phasenversetzt zur Kette und sind daher viel weniger geeignet, zum Aufbau einer schädlichen Gesamtschwingung beizutragen.

Es ist aber für den Fachmann durchaus möglich, im Rahmen seiner Kenntnisse über die Eigenschaften von Kunststoffen, ein Matrixmaterial für die Stäbe auszuwählen, das seinerseits, wie das Elastomer des Mitnehmers, hysteresebehaftet ist, so daß dann die Stäbe ihrerseits nicht als Schwingungsglieder, sondern als Dämpfungsglieder wirksam sind.

Als Bewehrungsmaterial für die Stäbe bieten sich etwa Glasfasern an, die auch eine gewisse Querbelastung ertragen. Erfindungsgemäß haben sich aber Kohlenstoffasern als besonders geeignet herausgestellt (Anspruch 2), die eine äußerst hohe Längsfestigkeit, aber eine nur geringe Querfestigkeit aufweisen. Die Längsfestigkeit ergibt eine sehr hohe Biegesteifigkeit der Stäbe. Die Querbelastung ist aber aufgrund der geeigneten Ausbildung der Mitnehmer unerwartet so gering, daß sie die Festigkeit der Fasern nicht überschreitet.

Zu diesem Zweck ist es besonders von Vorzug, wenn der Mitnehmer als längliche, zylindrische Hülse ausgebildet ist, deren Enden eine geringere Wandstärke aufweisen als deren mittlerer Bereich (Anspruch 3). Dadurch ist dafür gesorgt, daß die Biegesteifigkeit der Hülse zu ihren Enden hin abnimmt, so daß bei der Kraftübertragung keine Unstetigkeitsstelle erscheint. Bei einer Hülse mit durchgehend gleicher Wandstärke würde an deren Ende eine Unstetigkeitswelle auftreten. - Die Länge der Hülse beträgt dabei bevorzugt etwa ein Siebtel der Länge des Stabes, die Länge eines Endes der Hülse mit verringerter Wandstärke beträgt bevorzugt etwa ein Fünftel der Gesamtlänge der Hülse.

Die Hülse kann auch allmählich zu den Enden hin verlaufend in ihrer Wandstärke abnehmen.

Dabei kann die Hülse auf den Stab aufgeschoben oder aufgepreßt oder aufgeschrumpft sein. Sie kann zusätzlich mit dem Stab verklebt sein.

Eine besonders innige Verbindung mit dem Stab ergibt sich jedoch dann, wenn die Hülse auf den Stab aufgespritzt ist (Anspruch 4). Diese innige Verbindung verhindert Unstetigkeiten bei der Kraftübertragung.

Die Enden der Welle bzw. des Stabes sitzen in Aufnahmebohrungen jeweils einer Transportkette und sind im Gegensatz zu den bekannten Wellen in diese Aufnahmebohrungen eingepreßt. Zu diesem Zweck sind die Enden der Stäbe längsgerippt (Anspruch 5). Im Gegensatz zu gerippten Stahlbolzen verformen die Rippen der erfindungsgemäßen Stäbe jedoch nicht die Oberfläche der Bohrungen, sondern die Rippen werden leicht breitgedrückt und bilden Dämpfungskörper, so daß eine Schwingungsübertragung von den Transportketten auf die Stäbe erschwert ist.

Dennoch sind die Stäbe an der Drehung gehindert, so daß sie im Betrieb nicht, wie bekannte Wellen, aus allen möglichen Richtungen her belastet werden, sondern nur in den Hauptlastrichtungen. Auch diese Maßnahme trägt zur Haltbarkeit der Stäbe bei.

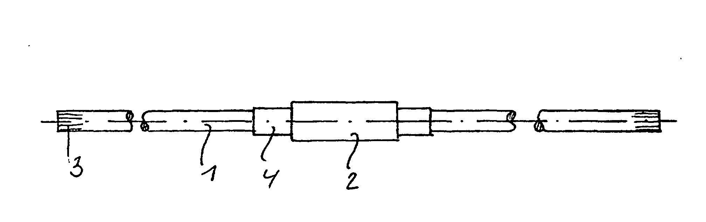

Der Gegenstand der Erfindung wird anhand eines Ausführungsbeispiels der beigefügten, schematischen Zeichnung noch näher erläutert. Die Zeichnung zeigt in ihrer einzigen Figur die Ansicht einer erfindungsgemäßen Welle.

Diese Welle besteht aus einem zylindrischen Stab 1, der aus kohlestoffaserverstärktem Kunststoff besteht. In der Mitte des Stabes 1 ist ein Mitnehmer 2 angeordnet, der die Form einer zylindrischen Hülse mit verjüngten oder dünnwandigen Enden 4 aufweist.

Diese Hülse 2 mit ihren Enden 4 ist auf den Stab 1 aufgespritzt.

Die Enden 3 des Stabes 1 sind fein längsgerippt, um in Bohrungen der Transportkette (nicht gezeigt) unverdrehbar aufgenommen zu werden. Dabei erfolgt eine Schwingungsdämpfung, weil die Kämme der Rippen leicht zusammengedrückt sind und aufgrund ihrer Beschaffenheit (Kunststoff und Kohlefasern) als Schwingungsdämpfer wirken.

## Patentansprüche

1. Welle zum Abtrennen der aufeinanderfolgenden Patronen-Aufnahmezellen eines angetriebenen Magazines für eine Schnellfeuerwaffe, vorzugsweise eine Flugzeugkanone, aus einem länglichen, im wesentlichen kreiszylindrischen Stab (1), dessen beide Enden (3) zur Befestigung in einer Transportkette ausgebildet sind, und mit einem eine mittige Verdickung bildenden Mitnehmer (2), der fest mit dem Stab (1) verbunden ist, **dadurch gekennzeichnet, daß** der Stab (1) faserverstärkten Kunststoff und der Mitnehmer (2) einen Elastomer umfaßt.

2. Welle nach Anspruch 1, **dadurch gekennzeichnet, daß** der faserverstärkte Kunststoff ein Kohlenstoffaser-Verbundmaterial ist.

3. Welle nach einem der Ansprüche 1 oder 2, **dadurch gekennzeichnet, daß** der Mitnehmer (2) aus einer länglichen, im wesentlichen zylindrischen Hülse gebildet ist.

4. Welle nach Anspruch 3, **dadurch gekennzeichnet, daß** die beiden Enden (4) der Hülse (2) eine - gegenüber dem Mittelabschnitt der Hülse (2) - verringerte Wandstärke aufweisen.

5. Welle nach einem der Ansprüche 2 bis 4, **dadurch gekennzeichnet, daß** das Elastomermaterial auf den Stab (1) aufgespritzt ist.

6. Welle nach einem der vorstehenden Ansprüche, **dadurch gekennzeichnet, daß** die Enden (3) des Stabes (1) längsgerippt sind.

## Claims

1. A shaft for separating consecutive cartridge-receiving cells of a driven magazine for a rapid fire weapon, preferably an aircraft gun, consisting of an elongated, substantially circular cylindrical rod (1), the two ends (3) of which are designed for fixing in a transport chain, and having a driver (2) forming a central thickened portion, which is securely connected to the rod (1),
**characterised in that** the rod (1) is made from fibre-reinforced plastic and the driver is made from an elastomer.

2. A shaft according to Claim 1,
**characterised in that** the fibre-reinforced plastic is a carbon fibre composite material.

3. A shaft according to one of Claims 1 or 2,
**characterised in that** the driver (2) is formed by an elongated, substantially cylindrical sleeve.

4. A shaft according to Claim 3,
**characterised in that** the two ends (4) of the sleeve (2) have a reduced wall thickness relative to the central portion of the sleeve (2).

5. A shaft according to one of Claims 2 to 4,
**characterised in that** the elastomer material is sprayed onto the rod (1).

6. A shaft according to one of the preceding Claims,
**characterised in that** the ends (3) of the rod (1) are longitudinally ribbed.

## Revendications

1. Arbre pour la séparation des cellules successives de prise de cartouches d'un magasin entraîné pour les armes à tir rapide, de préférence un canon pour avion, formé d'une barre (1) longitudinale sensiblement cylindrique circulaire, dont les deux extrémités (3) sont formées pour la fixation dans une chaîne d'entraînement et avec un entraîneur (2) formant un épaississement central qui est relié fixement à la barre (1), **caractérisé en ce que** la barre (1) est composée de matière plastique renforcée par des fibres et **en ce que** l'entraîneur (2) est composé d'un élastomère.

2. Arbre selon la revendication 1, **caractérisé en ce que** la matière plastique renforcée par des fibres est un matériau composite de fibres de carbone.

3. Arbre selon l'une quelconque des revendications 1 ou 2, **caractérisé en ce que** l'entraîneur (2) est composé d'un manchon oblong sensiblement cylindrique.

4. Arbre selon la revendication 3, **caractérisé en ce que** les deux extrémités (4) du manchon (2) comportent une épaisseur de paroi réduite en face de la section mediane du manchon (2).

5. Arbre selon l'une quelconque des revendications 2 à 4, **caractérisé en ce que** le matériau élastomère est répandu par vaporisation sur la barre (1).

6. Arbre selon l'une quelconque des revendications précédentes, **caractérisé en ce que** les extrémités (3) de la barre (1) comportent des rainures longitudinales.
